# EUROPEAN PATENT APPLICATION

(11) **EP 4 641 755 A1**
(43) Date of publication of application: **29.10.2025**
(21) Application number: 23906140.1
(22) Date of filing: 25.12.2023
(51) Int. Cl.: H01M 10/52, H01M 50/244, H01M 50/342, H01M 50/383

(54) **BATTERY PACK ANTI-CONDENSATION STRUCTURE AND MANUFACTURING METHOD THEREFOR**

(30) Priority: 23.12.2022 CN 202211670931
(71) Applicant: SVOLT Energy Technology Co., Ltd., Changzhou, Jiangsu 213200 (CN)
(72) Inventor: CHEN, Xuchao, hangzhou, Jiangsu 213200 (CN); TANG, Lijuan, hangzhou, Jiangsu 213200 (CN)
(74) Representative: Michalski Hüttermann & Partner Patentanwälte mbB
(86) International application number: PCT/CN2023/141604
(87) International publication number: WO 2024/131985

(57) **Abstract**

The present application relates to the field of battery pack technology, particularly to a battery pack anti-condensation structure and its manufacturing method. The structure includes: a housing comprising a first plane, a second plane, and a first cavity; an ejector pin disposed in the first cavity and connected to the second plane; and a moisture absorption portion disposed on the first plane and configured to absorb water vapor. The breathable membrane, coated with a PU waterproof coating fabric on its surface, can prevent water vapor from entering the battery pack from the outside. Meanwhile, the moisture absorbent material adhered to the surface of the inner flame-arresting mesh can absorb water vapor inside the battery pack. When thermal runaway is triggered, the adhesive layer on the moisture-absorbing foam surface fails due to high temperature, causing the moisture absorbent material to separate from the inner flame-arresting mesh, which does not affect the post-burst ventilation and flame-arresting performance. This improves the anti-corrosion and insulation performance of the battery pack, thereby enhancing the safety performance of the battery pack.

## Description

### Technical Field

The present application relates to the field of battery pack technology, particularly to a battery pack anti-condensation structure and its manufacturing method.

### Background

With the rise of new energy vehicles, there are various battery pack designs. Factors such as energy density and electric vehicle platforms determine different battery pack designs. As the industrialization of power battery industry accelerates, the safety design of battery packs has become a hot research topic, such as how to improve the electrical safety and thermal runaway safety of battery packs, and how to reduce condensation issues inside battery packs.

However, existing battery pack explosion-proof valves mostly adopt ejector pin burst designs, where the breathable membrane of the explosion-proof valve has high air permeability. The battery pack cannot prevent humid water vapor from entering under high temperature and humidity conditions, and cannot prevent condensation formation inside the battery pack, thereby affecting the insulation and short-circuit risk of the battery pack and impacting its safety performance.

### Summary

The object of the present application is: to solve the above technical problems, the present application provides a battery pack anti-condensation structure aimed at solving the condensation problem inside battery packs.

In some embodiments of the present application, the breathable membrane uses expanded polytetrafluoroethylene (E-PTFE) material, which is pierced by the ejector pin after thermal runaway triggers due to surface deformation. A PU waterproof coating fabric is applied on its surface to shield the microporous structure on the membrane surface. The coating material thickness is between 0.05-0.1mm and has the same mechanical properties as the breathable membrane.

In some embodiments of the present application, two rectangular uncoated areas with widths of 3-7mm can be reserved on the breathable membrane, intersecting in a cross pattern. The intersection point must align with the circle of the ejector pin, and can also intersect in three lines, four lines, etc., with the center point passing through the ejector pin. This ensures the membrane center can be pierced while tearing based on the uncoated areas, improving burst response time and enhancing battery pack safety and insulation performance.

In some embodiments of the present application, the breathable membrane coated with PU waterproof coating fabric can prevent water vapor from entering a battery pack from outside. Meanwhile, moisture absorbent material adhered to the inner flame-arresting mesh surface can absorb water vapor inside the battery pack. When thermal runaway triggers, the adhesive layer on the moisture-absorbing foam surface fails due to high temperature, causing the moisture absorbent material to separate from the inner flame-arresting mesh without affecting post-burst ventilation and flame-arresting performance. This improves the battery pack's anti-corrosion and insulation performance, thereby enhancing its safety performance.

In some embodiments of the present application, external mounting point structures are used, with through-hole design for mounting holes and external installation. The housing is designed with pressed-in nuts for easy assembly and disassembly, saving internal battery pack space while facilitating after-sales maintenance, allowing replacement without disassembling the housing.

In some embodiments of the present application, a double-layer flame-arresting structure is adopted with staggered mesh holes design to improve battery pack safety performance. The inner side uses a convex mesh structure while the outer layer uses a flat mesh structure, saving internal space while the convex mesh structure increases flame-arresting distance with the flat mesh, improving device safety and battery pack flame-arresting performance.

In some embodiments of the present application, a battery pack anti-condensation structure is provided, comprising:
a housing comprising a first plane, a second plane, and a first cavity;
an ejector pin disposed in the first cavity, wherein the ejector pin is connected to the second plane;
a moisture absorption portion disposed on the first plane, wherein the moisture absorption portion is configured to absorb water vapor.

In some embodiments of the present application, the moisture absorption portion comprises:
a breathable membrane having an inner surface coated with a moisture absorbent material, wherein the moisture absorbent material is configured to absorb moisture inside the housing;
wherein the breathable membrane comprises a coated area and an uncoated area;
wherein a center point of the uncoated area is located on a projection of the ejector pin on the breathable membrane, and when the ejector pin pierces the breathable membrane, the breathable membrane tears based on the uncoated area.

In some embodiments of the present application, the moisture absorption portion further comprises:
a flame-arresting structure comprising a first flame-arresting mesh and a second flame-arresting mesh, wherein the first flame-arresting mesh is a convex mesh structure and the second flame-arresting mesh is a flat mesh structure;
wherein the first flame-arresting mesh and the second flame-arresting mesh are connected to the housing through rivets;
wherein through-hole structures are provided on the first flame-arresting mesh and the second flame-arresting mesh;
wherein the first flame-arresting mesh is coated with a moisture absorbent material configured to absorb moisture inside the battery pack.

In some embodiments of the present application, the through-hole structures of the first flame-arresting mesh and the second flame-arresting mesh are arranged in a staggered pattern.

In some embodiments of the present application, it further comprises:
a connection portion disposed on the housing and configured to connect to the battery pack;
wherein the connection portion comprises:
   a first connection hole, a second connection hole, a third connection hole, and a fourth connection hole.

In some embodiments of the present application, a method for making a battery pack anti-condensation structure is provided, comprising:
obtaining a ventilation requirement of the battery pack, and determining an area of an uncoated area of a breathable membrane according to the ventilation requirement of the battery pack;
determining manufacturing parameters of the uncoated area of the breathable membrane according to the area of the uncoated area of the breathable membrane.

In some embodiments of the present application, determining the area of the uncoated area of the breathable membrane according to the ventilation requirement of the battery pack comprises:
presetting a matrix of battery pack ventilation requirements and a matrix of areas of breathable membrane uncoated areas;
obtaining the ventilation requirement of the battery pack and determining the area of the uncoated area of the breathable membrane according to the ventilation requirement of the battery pack;
wherein the ventilation requirement of the battery pack increases proportionally with the area of the uncoated area of the breathable membrane.

In some embodiments of the present application, determining the manufacturing parameters of the uncoated area of the breathable membrane according to the area of the uncoated area of the breathable membrane comprises:
setting multiple uncoated sub-areas that intersect with each other, wherein their intersection is located on a projection of an ejector pin on the breathable membrane, and when the ejector pin pierces the breathable membrane, the breathable membrane tears based on the uncoated area.

In some embodiments of the present application, setting the multiple uncoated sub-areas comprises:
setting the uncoated sub-areas as two rectangles with widths of 3-7mm, wherein the two rectangles intersect in a cross pattern;
wherein the length of each rectangle is less than the width of the breathable membrane;
wherein the sum of the areas of the two rectangles is less than 1/4 of the area of the breathable membrane.

In some embodiments of the present application, setting the multiple uncoated sub-areas further comprises:
presetting a burst pressure threshold M1 for the ejector pin;
obtaining a designed burst pressure value M2 for the battery pack anti-condensation structure;
setting the uncoated sub-areas as rectangles when M1>M2;
setting the uncoated sub-areas as polygonal structures when M1<M2.

Compared with the prior art, the advantageous effects of the battery pack anti-condensation structure and its manufacturing method of the present application embodiments are:
Two rectangular uncoated areas with widths of 3-7mm are reserved on the breathable membrane, intersecting in a cross pattern. The intersection point must align with the circle of the ejector pin, and can also intersect in three lines, four lines, etc., with the center point passing through the ejector pin. This ensures the membrane center can be pierced while tearing along the uncoated areas, improving burst response time and enhancing battery pack safety and insulation performance.

The breathable membrane coated with PU waterproof coating fabric can prevent water vapor from entering the battery pack from outside. Meanwhile, moisture absorbent material adhered to the inner flame-arresting mesh surface can absorb water vapor inside the battery pack. When thermal runaway triggers, the adhesive layer on the moisture-absorbing foam surface fails due to high temperature, causing the moisture absorbent material to separate from the inner flame-arresting mesh without affecting post-burst ventilation and flame-arresting performance. This improves the battery pack's anti-corrosion and insulation performance, thereby enhancing its safety performance.

### Brief Description of the Drawings

Fig. 1 is a schematic diagram of a battery pack anti-condensation structure according to a preferred embodiment of the present application;
Fig. 2 is a sectional view of a battery pack anti-condensation structure according to a preferred embodiment of the present application;
Fig. 3 is another sectional view of a battery pack anti-condensation structure according to a preferred embodiment of the present application;
Fig. 4 is a schematic diagram of uncoated sub-areas of the breathable membrane according to a preferred embodiment of the present application;
Fig. 5 is a flow chart of a method for making a battery pack anti-condensation structure according to a preferred embodiment of the present application.

In the figures: housing-100; first cavity-110; ejector pin-200; breathable membrane-300; coated area-310; uncoated area-320; first flame-arresting mesh-410; second flame-arresting mesh-420; rivet-430; first connection hole-510, second connection hole-520, third connection hole-530; fourth connection hole-540.

### Detailed Description

The specific implementation modes of the present application will be described in further detail below in conjunction with the drawings and embodiments. The following embodiments are used to illustrate the present application but not to limit the scope of the present application.

In the description of the present application, it should be understood that terms such as "center", "up", "down", "front", "back", "left", "right", "vertical", "horizontal", "top", "bottom", "inner", "outer" indicating directional or positional relationships are based on the directional or positional relationships shown in the drawings, are merely for the convenience of describing the present application and simplifying the description, and do not indicate or imply that the referred device or element must have a specific orientation, be constructed in a specific orientation, and operate in a specific orientation, therefore should not be construed as limitations of the present application.

The terms "first" and "second" are used only for descriptive purposes and should not be understood as indicating or implying relative importance or implicitly indicating the number of technical features referred to. Thus, features defined as "first" and "second" may explicitly or implicitly include one or more of such features. In the description of the present application, unless otherwise stated, "multiple" means two or more.

In the description of the present application, it should be noted that, unless otherwise explicitly specified and limited, the terms "installed," "connected," and "coupled" should be understood broadly. For example, it can be a fixed connection, a detachable connection, or an integral connection; it can be a mechanical connection or an electrical connection; it can be a direct connection or an indirect connection through an intermediate medium. For those skilled in the art, the specific meaning of the above terms in the present application can be understood according to specific situations.

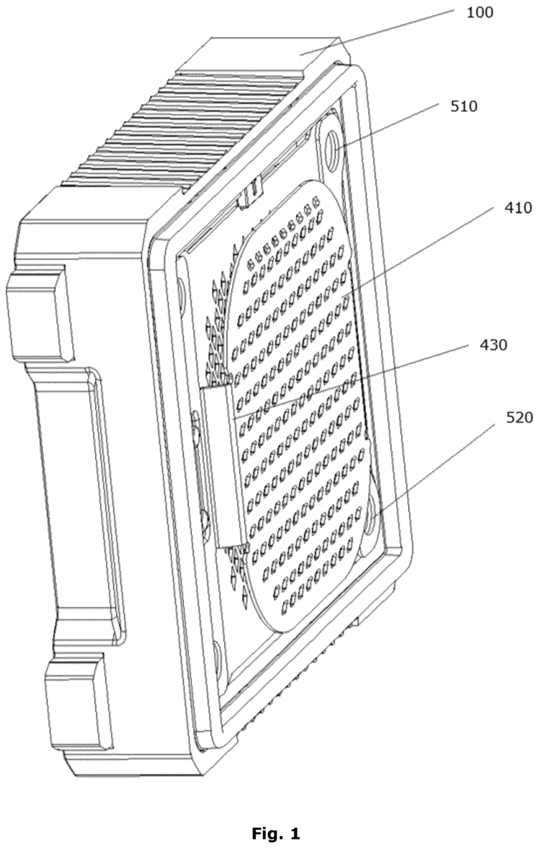

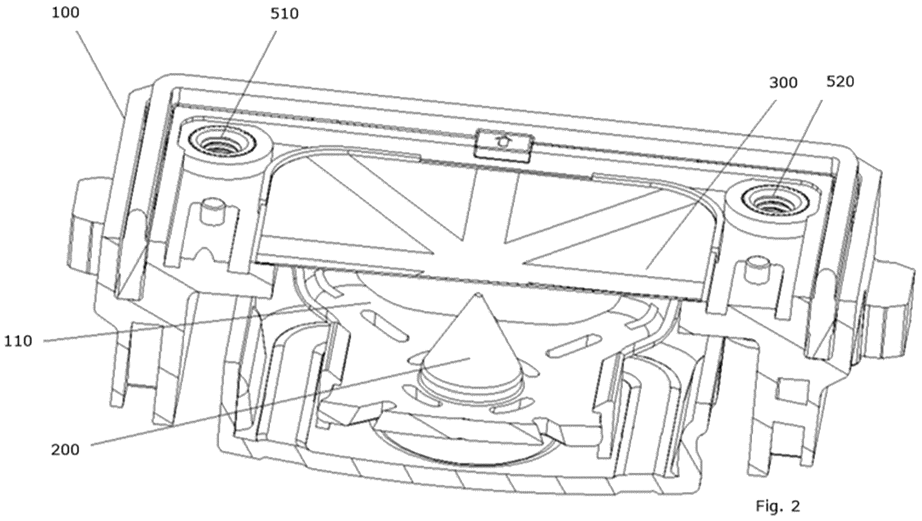

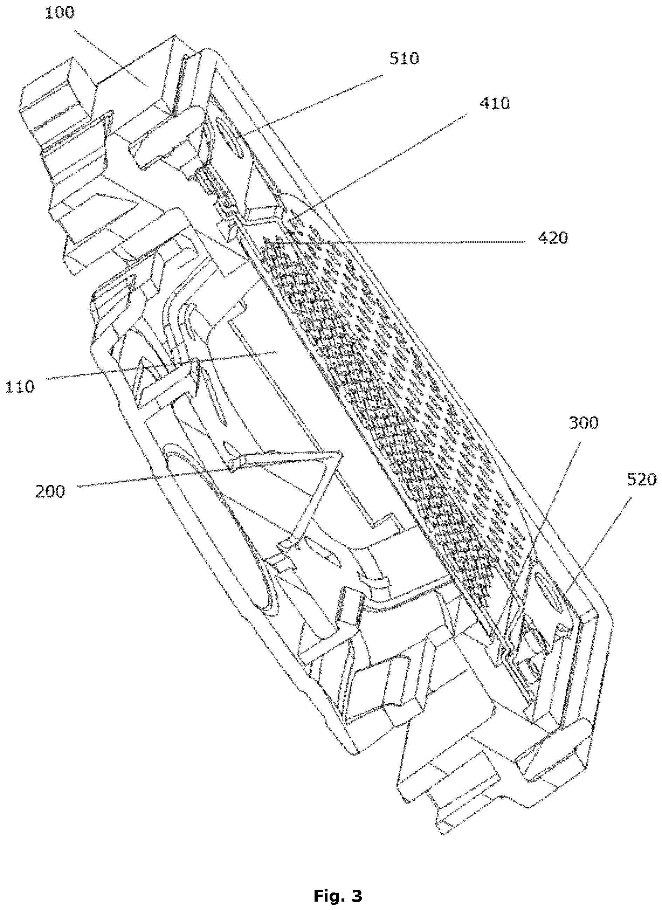

As shown in Figs. 1-4, a battery pack anti-condensation structure according to a preferred embodiment of the present application comprises:
a housing 100 comprising a first plane, a second plane, and a first cavity 110;
an ejector pin 200 disposed in the first cavity 110, wherein the ejector pin 200 is connected to the second plane;
a moisture absorption portion disposed on the first plane and configured to absorb water vapor.

Specifically, the moisture absorption portion comprises:
a breathable membrane 300 having an inner surface coated with a moisture absorbent material configured to absorb moisture inside the housing 100;
the breathable membrane 300 comprises a coated area 310 and an uncoated area 320;
a center point of the uncoated area 320 is located on a projection of the ejector pin 200 on the breathable membrane 300, and when the ejector pin 200 pierces the breathable membrane 300, the breathable membrane 300 tears based on the uncoated area 320.

Specifically, the breathable membrane 300 uses E-PTFE material, which is pierced by the ejector pin 200 after thermal runaway triggers due to membrane surface deformation. A PU waterproof coating fabric is applied on its surface to shield the microporous structure on the breathable membrane 300 surface. The coating material thickness is between 0.05-0.1mm and has the same mechanical properties as the breathable membrane 300.

Specifically, the PU waterproof coating fabric is applied to the inner surface of the breathable membrane 300, with no coating on the main body welding surface to avoid affecting the welding strength between the breathable membrane 300 and the main body.

Specifically, the uncoated area 320 can be two rectangles intersecting in a cross pattern, with the intersection point necessarily aligned with the circle of the ejector pin 200. It can also intersect in three lines, four lines, etc., with the center point passing through the ejector pin 200, ensuring the middle of the breathable membrane 300 can be pierced while tearing along the uncoated area 320, improving burst response time and enhancing battery pack safety and insulation performance.

In the preferred embodiment of the present application, the moisture absorption portion further comprises:
a flame-arresting structure comprising a first flame-arresting mesh 410 and a second flame-arresting mesh 420, wherein the first flame-arresting mesh 410 is a convex mesh structure and the second flame-arresting mesh 420 is a flat mesh structure;
the first flame-arresting mesh 410 and the second flame-arresting mesh 420 are connected to the housing 100 through rivets 430;
through-hole structures are provided on the first flame-arresting mesh and the second flame-arresting mesh;
the first flame-arresting mesh is coated with a moisture absorbent material configured to absorb moisture inside the battery pack.

Specifically, the through-hole structures of the first flame-arresting mesh and the second flame-arresting mesh are arranged in a staggered pattern.

Specifically, the mesh holes adopt a staggered design to improve battery pack safety performance. The first flame-arresting mesh uses a convex mesh structure while the second flame-arresting mesh uses a flat mesh structure, saving explosion-proof valve internal space while the convex mesh structure increases flame-arresting distance with the flat mesh.

Specifically, the first flame-arresting mesh 410 surface is adhered with moisture absorbent material that can absorb water vapor inside the battery pack. When thermal runaway triggers, the adhesive layer on the moisture-absorbing foam surface fails due to high temperature, causing the moisture absorbent material to separate from the inner flame-arresting mesh without affecting post-burst ventilation and flame-arresting performance.

In the preferred embodiment of the present application, it further comprises:
a connection portion disposed on the housing 100 and configured to connect to the battery pack;
wherein the connection portion comprises:
   a first connection hole 510, a second connection hole 520, a third connection hole 530, and a fourth connection hole 540.

Specifically, the first connection hole 510, second connection hole 520, third connection hole 530, and fourth connection hole 540 are all pressed-in nuts. The connection portion enables the battery pack anti-condensation structure to connect with the battery pack, facilitating assembly and disassembly, saving internal battery pack space while facilitating after-sales maintenance, allowing replacement without disassembling the housing 100.

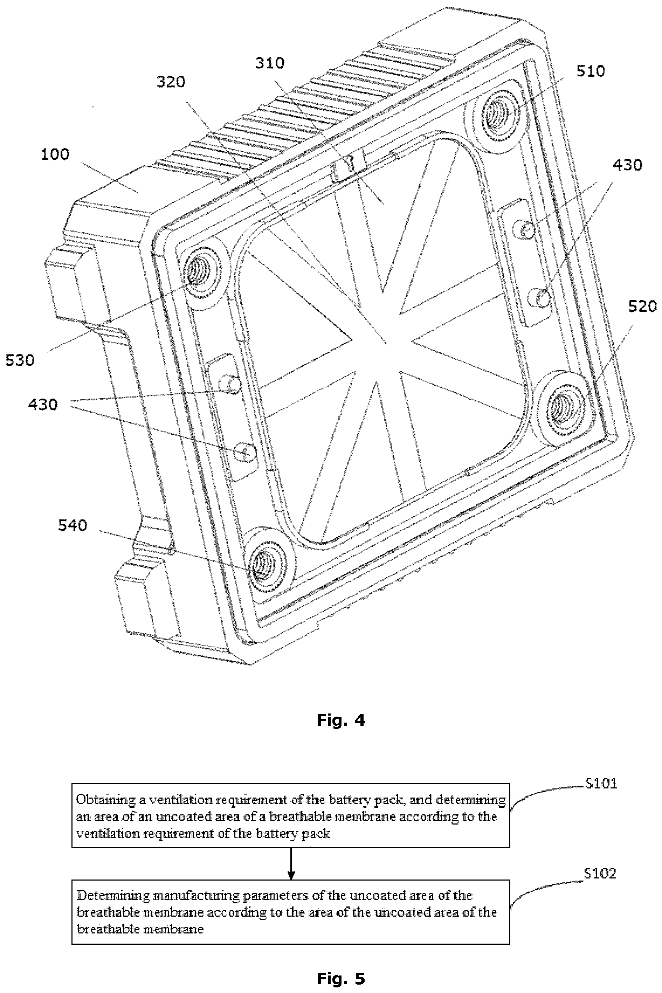

As shown in Fig. 5, another preferred embodiment based on the above preferred embodiment provides a method for making a battery pack anti-condensation structure, comprising:
S101: obtaining a ventilation requirement of the battery pack, and determining an area of an uncoated area of a breathable membrane according to the ventilation requirement of the battery pack;
S102: determining manufacturing parameters of the uncoated area of the breathable membrane according to the area of the uncoated area of the breathable membrane.

Specifically, determining the area of the uncoated area of the breathable membrane according to the ventilation requirement of the battery pack comprises:
presetting a matrix A of battery pack ventilation requirements, defined as A(A1,A2,A3,A4), where A1 is a preset first battery pack ventilation requirement, A2 is a preset second battery pack ventilation requirement, A3 is a preset third battery pack ventilation requirement, A4 is a preset fourth battery pack ventilation requirement, and A1<A2<A3<A4;
presetting a matrix B of breathable membrane uncoated areas, defined as B(B1,B2,B3,B4), where B1 is a preset first breathable membrane uncoated area, B2 is a preset second breathable membrane uncoated area, B3 is a preset third breathable membrane uncoated area, B4 is a preset fourth breathable membrane uncoated area, and B1<B2<B3<B4;
obtaining a battery pack ventilation requirement a, and determining a breathable membrane uncoated area b according to the battery pack ventilation requirement a;
when A1<a<A2, setting the breathable membrane uncoated area b less than the first breathable membrane uncoated area B1, i.e., b<B1;
when A2<a<A3, setting the breathable membrane uncoated area b between the first breathable membrane uncoated area B1 and the second breathable membrane uncoated area B2, i.e., B1<b<B2;
when A3<a<A4, setting the breathable membrane uncoated area b between the second breathable membrane uncoated area B2 and the third breathable membrane uncoated area B3, i.e., B2<b<B3;
when a>A4, setting the breathable membrane uncoated area b between the third breathable membrane uncoated area B3 and the fourth breathable membrane uncoated area B4, i.e., B3<b<B4.

Specifically, the battery pack ventilation requirement increases proportionally with the area of the uncoated area of the breathable membrane.

Specifically, the larger the ventilation requirement before burst of the ventilation valve, the larger the area of the uncoated region of the breathable membrane.

In the preferred embodiment of the present application, determining the manufacturing parameters of the uncoated area of the breathable membrane according to the area of the uncoated area of the breathable membrane comprises: setting multiple uncoated sub-areas that intersect with each other, wherein their intersection is located on a projection of the ejector pin 200 on the breathable membrane, and when the ejector pin 200 pierces the breathable membrane, the breathable membrane tears based on the uncoated area.

Specifically, the center point of the uncoated area passes through the ejector pin 200, ensuring the ejector pin 200 can pierce the middle of the breathable membrane while the membrane tears based on the uncoated area, improving burst response time and enhancing battery pack safety and insulation performance.

Specifically, setting the multiple uncoated sub-areas comprises:
setting the uncoated sub-areas as two rectangles with widths of 3-7mm, wherein the two rectangles intersect in a cross pattern;
the length of each rectangle is less than the width of the breathable membrane; the sum of the areas of the two rectangles is less than 1/4 of the area of the breathable membrane.

When the sum of the areas of the two rectangles is less than 1/4 of the breathable membrane area, it ensures that the burst pressure remains unchanged before and after coating the explosion-proof valve. If the sum of the areas of the two rectangles is greater than 1/4 of the breathable membrane area, the burst pressure after coating the explosion-proof valve is 1.5 to 2 times that of the uncoated explosion-proof valve.

In the preferred embodiment of the present application, setting the multiple uncoated sub-areas further comprises:
presetting a burst pressure threshold M1 for the ejector pin;
obtaining a designed burst pressure value M2 for the battery pack anti-condensation structure;
setting the uncoated sub-areas as rectangles when M1>M2;
setting the uncoated sub-areas as polygonal structures when M1<M2.

Specifically, if the designed burst pressure value for the ejector pin explosion-proof valve is above 20KPa, the uncoated area of the breathable membrane can be circular, elliptical, or other polygonal structures.

According to the first concept of the present application, the breathable membrane uses E-PTFE material, which is pierced by the ejector pin after thermal runaway triggers due to membrane surface deformation. A PU waterproof coating fabric is applied on its surface to shield the microporous structure on the breathable membrane surface. The coating material thickness is between 0.05-0.1mm and has the same mechanical properties as the breathable membrane.

According to the second concept of the present application, two rectangular uncoated areas with widths of 3-7mm can be reserved on the breathable membrane, intersecting in a cross pattern. The intersection point must align with the circle of the ejector pin, and can also intersect in three lines, four lines, etc., with the center point passing through the ejector pin. This ensures the membrane center can be pierced while tearing along the uncoated areas, improving burst response time and enhancing battery pack safety and insulation performance.

According to the third concept of the present application, the breathable membrane coated with PU waterproof coating fabric can prevent water vapor from entering the battery pack from outside. Meanwhile, moisture absorbent material adhered to the inner flame-arresting mesh surface can absorb water vapor inside the battery pack. When thermal runaway triggers, the adhesive layer on the moisture-absorbing foam surface fails due to high temperature, causing the moisture absorbent material to separate from the inner flame-arresting mesh without affecting post-burst ventilation and flame-arresting performance. This improves the battery pack's anti-corrosion and insulation performance, thereby enhancing its safety performance.

According to the fourth concept of the present application, external mounting point structures are used, with through-hole design for mounting holes and external installation. The housing is designed with pressed-in nuts for easy assembly and disassembly, saving internal battery pack space while facilitating after-sales maintenance, allowing replacement without disassembling the housing.

According to the fifth concept of the present application, a double-layer flame-arresting structure is adopted with staggered mesh holes design to improve battery pack safety performance. The inner side uses a convex mesh structure while the outer layer uses a flat mesh structure, saving internal space while the convex mesh structure increases flame-arresting distance with the flat mesh, improving device safety and battery pack flame-arresting performance.

The above description is only the preferred embodiment of the present application. It should be pointed out that for ordinary technicians in this technical field, without departing from the technical principles of the present application, several improvements and replacements can be made, and these improvements and replacements should also be considered within the protection scope of the present application.

## Claims

1. A battery pack anti-condensation structure, comprising:
a housing comprising a first plane, a second plane, and a first cavity;
an ejector pin disposed in the first cavity, wherein the ejector pin is connected to the second plane; and
a moisture absorption portion disposed on the first plane, wherein the moisture absorption portion is configured to absorb water vapor.

2. The battery pack anti-condensation structure according to claim 1, wherein the moisture absorption portion comprises:
a breathable membrane having an inner surface coated with a moisture absorbent material, wherein the moisture absorbent material is configured to absorb moisture inside the housing;
wherein the breathable membrane comprises a coated area and an uncoated area;
wherein a center point of the uncoated area is located on a projection of the ejector pin on the breathable membrane, and when the ejector pin pierces the breathable membrane, the breathable membrane tears based on the uncoated area.

3. The battery pack anti-condensation structure according to claim 2, wherein the moisture absorption portion further comprises:
a flame-arresting structure comprising a first flame-arresting mesh and a second flame-arresting mesh, wherein the first flame-arresting mesh is a convex mesh structure and the second flame-arresting mesh is a flat mesh structure;
wherein the first flame-arresting mesh and the second flame-arresting mesh are connected to the housing through rivets;
wherein through-hole structures are provided on the first flame-arresting mesh and the second flame-arresting mesh;
wherein the first flame-arresting mesh is coated with a moisture absorbent material configured to absorb moisture inside a battery pack.

4. The battery pack anti-condensation structure according to claim 3, wherein the through-hole structures of the first flame-arresting mesh and the second flame-arresting mesh are arranged in a staggered pattern.

5. The battery pack anti-condensation structure according to claim 1, further comprising:
a connection portion disposed on the housing and configured to connect to a battery pack;
wherein the connection portion comprises:
a first connection hole, a second connection hole, a third connection hole, and a fourth connection hole.

6. A method for making a battery pack anti-condensation structure, comprising:
obtaining a ventilation requirement of a battery pack, and determining an area of an uncoated area of a breathable membrane according to the ventilation requirement of the battery pack;
determining manufacturing parameters of the uncoated area of the breathable membrane according to the area of the uncoated area of the breathable membrane.

7. The method according to claim 6, wherein determining the area of the uncoated area of the breathable membrane according to the ventilation requirement of the battery pack comprises:
presetting a matrix of battery pack ventilation requirements and a matrix of areas of breathable membrane uncoated areas;
obtaining the ventilation requirement of the battery pack and determining the area of the uncoated area of the breathable membrane according to the ventilation requirement of the battery pack;
wherein the ventilation requirement of the battery pack increases proportionally with the area of the uncoated area of the breathable membrane.

8. The method according to claim 7, wherein determining the manufacturing parameters of the uncoated area of the breathable membrane according to the area of the uncoated area of the breathable membrane comprises:
setting multiple uncoated sub-areas that intersect with each other, wherein their intersection is located on a projection of an ejector pin on the breathable membrane, and when the ejector pin pierces the breathable membrane, the breathable membrane tears based on the uncoated area.

9. The method according to claim 8, wherein setting the multiple uncoated sub-areas comprises:
setting the uncoated sub-areas as two rectangles with widths of 3-7mm, wherein the two rectangles intersect in a cross pattern;
wherein the length of each rectangle is less than the width of the breathable membrane;
wherein the sum of the areas of the two rectangles is less than 1/4 of the area of the breathable membrane.

10. The method according to claim 8, wherein setting the multiple uncoated sub-areas further comprises:
presetting a burst pressure threshold M1 for the ejector pin;
obtaining a designed burst pressure value M2 for the battery pack anti-condensation structure;
setting the uncoated sub-areas as rectangles when M1>M2;
setting the uncoated sub-areas as polygonal structures when M1<M2.
